# EUROPEAN PATENT APPLICATION

(11) **EP 2 846 271 A1**
(43) Date of publication of application: **11.03.2015**
(21) Application number: 13804547.1
(22) Date of filing: 09.06.2013
(51) Int. Cl.: G06F 17/30

(54) **METHOD AND DEVICE FOR OBTAINING PRODUCT INFORMATION AND COMPUTER STORAGE MEDIUM**

(30) Priority: 11.06.2012 CN 201210190616
(71) Applicant: Tencent Technology Shenzhen Company Limited, Shenzhen, Guangdong 518044 (CN)
(72) Inventor: TANG, Mu, Shenzhen Guangdong 518044 (CN); CHEN, Yan, Shenzhen Guangdong 518044 (CN); FAN, Zhongyi, Shenzhen Guangdong 518044 (CN); LUO, Qi, Shenzhen Guangdong 518044 (CN); SUN, Peng, Shenzhen Guangdong 518044 (CN); MOU, Weicheng, Shenzhen Guangdong 518044 (CN); GUO, Hongwei, Shenzhen Guangdong 518044 (CN); HUANG, Lixian, Shenzhen Guangdong 518044 (CN); LV, Hong, Shenzhen Guangdong 518044 (CN); HU, Wei, Shenzhen Guangdong 518044 (CN); SU, Nan, Shenzhen Guangdong 518044 (CN); ZHANG, Hong, Shenzhen Guangdong 518044 (CN)
(74) Representative: Jansen, Cornelis Marinus
(86) International application number: PCT/CN2013/077110
(87) International publication number: WO 2013/185601

(57) **Abstract**

The document applies to the field of information processing, and provides a method and device for acquiring product information, and a computer storage medium. The method includes that: original comment information of a user relevant to a product is collected from a public platform; the collected original information is filtered; the filtered information is analyzed and information on relevance to the product is acquired; and information on user feedback on the product is acquired by classifying and then counting and analyzing the acquired information on relevance. With what is described here, a problem in acquiring, by related art, information on user feedback on a product, such as high cost, low efficiency, platform bias, and failure to acquire quantitative data for high accuracy and the like, may be solved effectively.

## Description

### TECHNICAL FIELD

The disclosure belongs to the field of information acquisition in information processing. The disclosure relates in particular to a method and device for acquiring product information, and a non-transitory computer storage medium.

### BACKGROUND

At present, information on user feedback on a network product, such as usage, an existing problem, a recommendation, etc. regarding the network product, is acquired mainly through a survey by a network questionnaire or gathered from a forum.

However, at present, it is not supported for a user to take initiative in joining a survey by a network questionnaire. Instead, major investment of human and material resources is required to actively invite users to participate, and information is gathered manually. In particular, it requires a lot of financial support and costs much to put a questionnaire on an external platform. Moreover, it often takes 3-5 days to put and gather data, and someone has to manually check, sort, and count the gathered result, which takes a lot of time and leads to low efficiency, while accuracy thereof is not guaranteed. What's more, there is a platform-bias in selecting a target of the questionnaire, and the questionnaire may be directed at an internal (dedicated) platform, lacking randomness. That is to say, the questionnaire is not directed at an arbitrary public platform, thereby lacking accuracy.

On the other hand, it also requires to spend a lot of time and energy monitoring and gathering information on user feedback at a website of each major forum, and only qualitative statistics and sorting, instead of quantitative analysis, can be performed on information fed back by a user.

To sum up, in acquiring information on user feedback on a network product with related art, there exists a problem such as high cost, low efficiency, platform bias, and failure to acquire quantitative data for high accuracy and the like.

### SUMMARY

Embodiments of the disclosure provide a method for acquiring product information, capable of solving a problem such as high cost, low efficiency, platform bias and failure to acquire quantitative data for high accuracy in related art.

An embodiment of the disclosure is implemented as follows. A method for acquiring product information, includes steps of:
collecting, from a public platform, original comment information of a user relevant to a product;
filtering the collected original information;
analyzing the filtered information and acquiring information on relevance to the product; and
classifying and then performing statistics and analysis on the acquired information on relevance so as to acquire information on user feedback on the product.

Embodiments of the disclosure provide a device for acquiring product information, including:
an information collecting module configured for collecting, from a public platform, original comment information of a user relevant to a product;
an information filtering module configured for filtering the original information collected by the information collecting module;
an information analyzing module configured for analyzing the information filtered by the information filtering module and acquiring the information on relevance to the product; and
a result acquiring module configured for acquiring information on user feedback on the product by classifying and then performing statistics and analysis on the acquired information on relevance.

An embodiment of the disclosure provides a non-transitory computer-readable storage medium, storing a computer program for executing the method for acquiring product information.

It may be seen from an aforementioned technology solution that with embodiments of the disclosure, original comment information of a user relevant to a product is collected from an arbitrary public platform, instead of a dedicated platform as in related art, and is filtered and analyzed to acquire information on relevance to the product; the acquired information on relevance are classified, counted and analyzed to acquire final information on user feedback on the product, such that a product operator may fully learn usage of the product by user according to the information on user feedback, so as to improve the product and increase user satisfaction in use. In addition, original comment information relevant to the product, which is provided by a user on one's own, is collected directly from an arbitrary public platform instead of by passively inviting a user to participate, as in related art; i.e. according to an embodiment of the disclosure, any of the original information is provided by a user on his/her own initiative (such as by posting a message on a micro-blog, leaving a message on a forum, etc.), without the need to invite any user to take any survey or investigation, thereby effectively reducing cost. Meanwhile, differing from manually gathering information in related art, automatic processing (including classification, statistics and analysis) after information collection is adopted, such that efficiency and accuracy in information acquisition can be increased effectively. In addition, data are collected randomly from an arbitrary public platform, instead of selectively collecting data from a dedicated platform as in related art; i.e. with an embodiment of the disclosure, multiple information sources (such as Tencent micro-blog, Sina micro-blog, a support platform, etc.) can be covered at the same time, such that a problem of a bias due to a platform difference, reduced accuracy due to lack of quantitative data, as well as high cost in questionnaire distribution, may be prevented effectively.

### BRIEF DESCRIPTION OF THE DRAWINGS

Fig.1 is a flowcharting of implementing a method for acquiring product information according to Embodiment 1 of the disclosure;
Fig.2 is a specific flowchart of a method for acquiring product information according to Embodiment 2 of the disclosure; and
Fig.3 is a schematic diagram of a structure of a device for acquiring product information according to Embodiment 3 of the disclosure.

### DETAILED DESCRIPTION

To clearly show a technology solution and advantage of the disclosure, the present disclosure is further elaborated below with reference to the drawings and embodiments. Note that specific embodiments described herein are merely for explaining the present disclosure, and are not intended to limit the present disclosure.

A technology solution of the disclosure is described below through specific embodiments.

### Embodiment 1

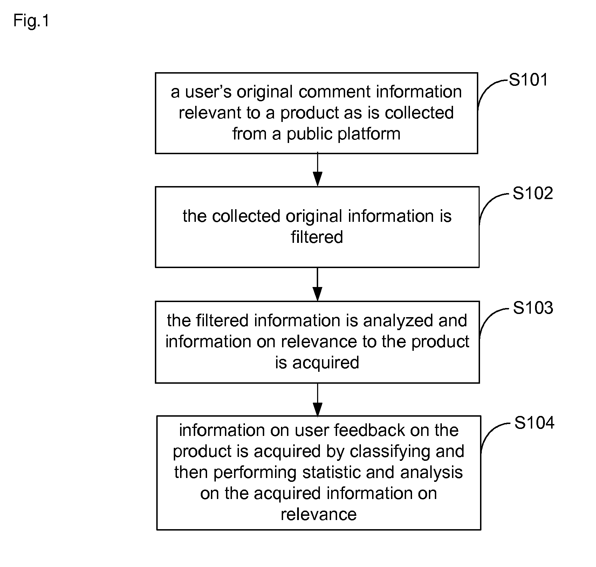

Fig.1 shows a flow of implementing a method for acquiring product information provided by Embodiment 1 of the disclosure. A detailed process of the method is as follows.

In step S101, original comment information of a user relevant to a product is collected from a public platform.

The public platform here may refer to a platform other than an internal platform or namely a dedicated platform, such as common micro-blogs and / or various forums.

The step may specifically be that: the original comment information of the user relevant to the product is collected from a micro-blog and / or a forum.

Specifically, the original comment information of the user relevant to the product (including the name of the product, an alias of a series or the name of a key functional block) is collected from a micro-blog and / or a forum through an Application Programming Interface (API) and / or a web crawler, and the collected original information is stored in a database. In the embodiment, the original information is collected from a place including but not limited to a micro-blog and / or a forum, a support platform, An Exp platform, etc.

In the embodiment, in collecting the original information, a collecting time interval may be preset (such as once per 1 hour), or collection may be performed in series.

Preferably, the embodiment may further include that: before being stored, the collected original information is sorted according to a preset rule, including being sorted according to characteristics of the content of the original information. The characteristics of the content of the original information include but are not limited to media information, official information, advertising information, preset blacklisted user comment information, etc., as shown in Table 1.

**Table 1**

| level-1 sorting | level-2 sorting | characteristics | way of processing |
|---|---|---|---|
| information | media | media, news etc. | storing |
| disseminating | official release | release by official account etc. | deleting |
| | sharing | application sharing, ##etc. | storing |
| | event advertising | advertising, awards event etc. | deleting |
| | internal online water army | blacklisted user | deleting |
| commenting | User recommendation | containing a word of mouth, such as awesome etc. | storing |
| | comments or thoughts | | |
| irrelevant statement | caused by fuzzy search | completely irrelevant to searched keyword(s) | deleting |

In step S102, the collected original information is filtered.

In the embodiment, step S102 may include that: repeating content and invalid information are removed from the collected original information.

For example, the repeating content may be removed as follows.

For an *Exp* platform or a *support* platform, the repeating content may be removed based on content of a text and a username.

For Tencent micro-blog or Sina micro-blog, a threshold may be set, and when the number of identical or similar pieces of the content of text is greater than the threshold, the text is deemed as advertising or a purely sharing micro-blog and is deleted.

The invalid information may be removed, including that invalid information such as an official release, event advertising, internal online water army, irrelevant statement etc. as shown in Table 1 are removed.

In step S103, the filtered information is analyzed and information on relevance to the product is acquired.

The information on relevance may specifically include: a word of public interest and / or a word of mouth. A word of public interest refers to a hotspot of user interest of the product. A word of mouth indicates a trend of user comments on the product.

The step may specifically be that: the filtered information is analyzed to acquire a word of public interest and / or a word of mouth relevant to the product.

In the embodiment, analysis is performed mainly on information remaining after filtering, such as information like commenting, media, sharing etc.. A word of mouth may then be extracted mainly from a commenting text.

In the embodiment, a word of public interest and / or a word of mouth relevant to the product may specifically be acquired by
performing, according to a common noun of the product, and / or a like product which is like the product and a similar product which is similar to the product, word segmentation on the filtered information and acquiring a result of the word segmentation.

In the embodiment, word segmentation is performed on the filtered information through a Chinese Lexical analyzing system according to a common noun of the product, and / or a like product which is like the product and a similar product which is similar to the product, to acquire the result of the word segmentation. For example, word segmentation may be performed on the filtered information by calling a segmenting algorithm in an Institute of Computing Technology Chinese Lexical Analysis System (ICTCLAS) through a segmenting interface provided by the ICTCLAS to acquire the result of the word segmentation.

Furthermore, an expression meeting a set frequency of occurrence (such as 7 times of occurrence) in the result of the word segmentation is selected, and the selected expression is sifted through a pre-stored lexicon to acquire a word of public interest and / or a word of mouth relevant to the product.

Specifically, the result of the word segmentation is corrected through a pre-stored segmenting lexicon to acquire a corrected result; the corrected result is sifted through a pre-stored word-of-mouth lexicon and / or an invalid lexicon to acquire a network-product-relevant word of public interest and / or word of mouth.

In the embodiment, a process of acquiring a word of public interest includes that the following are removed from a list of nouns: an expression with a frequency of occurrence less than a preset value (of one percent of a highest frequency among effective expressions, for example); and a single word, such as human, net etc.

The process of acquiring a word of mouth includes that an expression with a frequency of occurrence less than a preset value (of one percent of a highest frequency among effective expressions, for example) is removed from a list of adjectives; a list of verbs are searched for a commonly-used word of mouth, such as suck, awesome etc.; a found word of mouth is compared with a pre-stored word-of-mouth lexicon and sifted (in excel) to acquire a network-product-relevant word of mouth.

In step S104, information on user feedback on the product is acquired by classifying and then counting and analyzing the acquired information on relevance.

The step may specifically be that: the acquired word of public interest and / or word of mouth are classified, and statistics and analysis are performed on the classified word of public interest and word of mouth to acquire the information on user feedback on the product.

Specifically, any acquired word of public interest is put in one class, a positive word of mouth (such as *all right*, *awesome*, *GOOD*, etc.) in the words of mouth is put in one class, and a negative word of mouth (such as *bad*, *suck*, etc.) in the words of mouth is put in one class.

Statistics and analysis are performed on a sorted word of public interest, positive word of mouth, and negative word of mouth (including quantitative statistics and analysis of a change among quantities etc., such as a sudden increase in negative words of mouth) to acquire the information on user feedback, including a report on quantitative analysis and / or a report on qualitative analysis. The report on quantitative analysis may include information such as quantitative characteristics of the words of public interest and of positive words of mouth and of negative words of mouth, a change among the quantities and a reason of the change, and the like. The report on qualitative analysis may include information such as a hotspot of user interest of the product and an evaluation by word of mouth, etc.

According to the report on quantitative analysis and / or the report on qualitative analysis regarding the product, a product operator may fully learn user feedback on use of the product, so as to improve the product and increase user satisfaction in use.

As another specific embodiment of the disclosure, in order to monitor the status quo of a like product which is like the product and a similar product which is similar to the product, learn a trend of the field in time, and provide a major basis for development of the product and decision-making thereof, the method may further include steps as follows.

Comment information of the user on a like product which is like the product and a similar product which is similar to the product is collected from a public platform such as a micro-blog and / or a forum.

In a practical application, the information on a like product which is like the product and a similar product which is similar to the product (including the name, an alias of a series, the name of a key functional block etc. of the like product and the similar product) may be pre-stored. While the original comment information of the user relevant to the product is collected from a micro-blog and / or a forum, comment information of the user on a like product which is like the product and a similar product which is similar to the product is collected from a micro-blog and / or a forum according to the stored information on the like product and the similar product.

With an embodiment of the disclosure, original comment information of a user relevant to a product is collected from a micro-blog and / or a forum, and is filtered and analyzed to acquire a trend of user comments (by word of mouth) on the product and a hotspot of user interest of the product (a word of public interest); acquired words of public interest and / or words of mouth are classified and counted to acquire a report on quantitative analysis and / or a report on qualitative analysis regarding the product, such that a product operator may fully learn, according to the report on quantitative analysis and / or the report on qualitative analysis, user feedback on use of the product, so as to improve the product and increase user satisfaction in use. In addition, as the original comment information of the user relevant to the product is collected directly from a micro-blog and / or a forum, any of the original information is provided by a user on his/her own initiative (such as by posting a message on a micro-blog, leaving a message on a forum, etc.), without the need to invite any user to take any survey or investigation, thereby effectively reducing cost. Meanwhile, automatic processing after information collection effectively increases efficiency and accuracy. In addition, as multiple information sources (such as Tencent micro-blog, Sina micro-blog, a support platform, etc.) are covered at the same time, a problem of a bias due to a platform difference, reduced degree of accuracy due to lack of quantitative data and high cost in questionnaire distribution may be prevented effectively.

### Embodiment 2

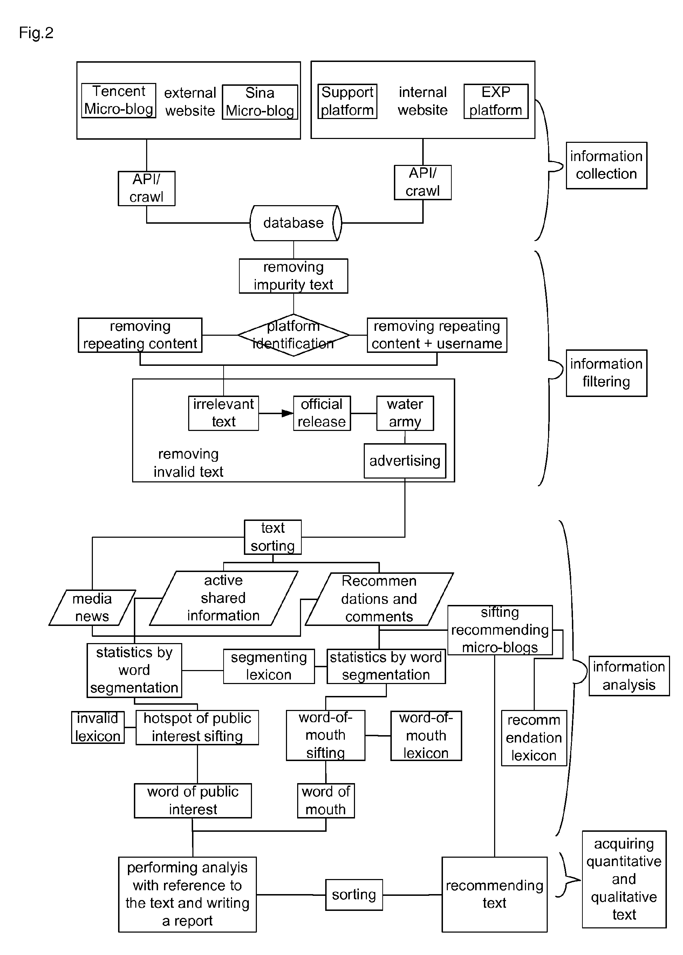

Fig.2 shows a specific flowchart of a method for acquiring product information according to Embodiment 2 of the disclosure. The embodiment includes four main steps: information collecting, information filtering, information analyzing, and quantitative-and-qualitative-text acquiring.

As shown in Fig.2, during information collecting, the original comment information of the user relevant to the product is collected, mainly through an API and / or a web crawler, from an information source such as a micro-blog, a forum or the like (such an information source may further include a platform of an internal website, such as a support platform, An Exp platform, etc.), and the collected original information is stored in a database.

During information filtering, impurity text (i.e. text information completely irrelevant to the product) has to be removed first, then, repeating content and invalid information may be removed for different platforms. Removing repeating content may include that repeating content text and a repeating username are removed. Removing the invalid information may include that irrelevant text information, information released officially, information released by a water army, and advertising information, etc. are removed.

The information analyzing may include that: the filtered information is sorted, mainly as media news, active shared information, and recommendations and comments; word segmentation is performed on the filtered information according to a common noun of the product and / or a competing product thereof by calling a segmenting algorithm in the ICTCLAS through a segmenting interface provided by the ICTCLAS to acquire the result of the word segmentation, which is then corrected through a pre-stored segmenting lexicon to acquire a corrected result; the corrected result is sifted through a pre-stored word-of-mouth lexicon and an invalid lexicon to acquire a word of public interest and / or a word of mouth relevant to the product. The information analyzing may further include that recommending text is acquired by sifting a recommending micro-blog through recommendations and comments and a pre-stored recommendation lexicon.

During qualitative text acquiring, a report on quantitative and qualitative analysis of the product may be acquired by ways such as classifying, interpreting, analyzing, and counting an acquired word of public interest and word of mouth.

### Embodiment 3

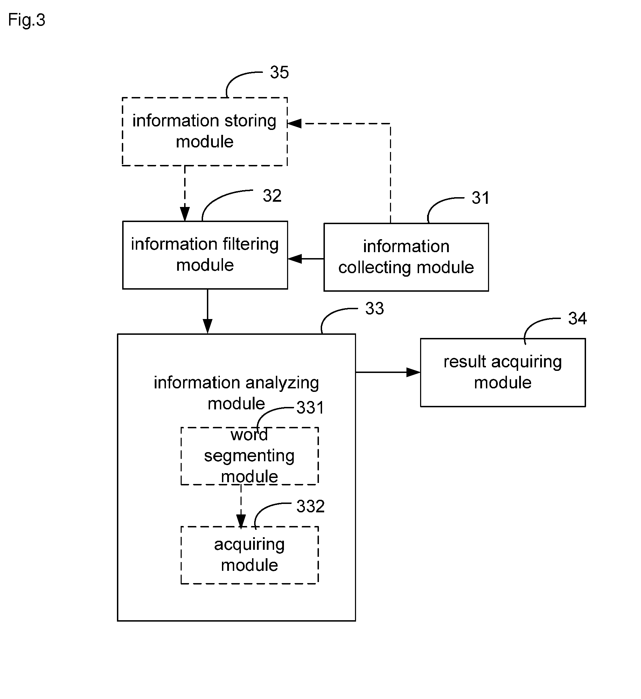

Fig.3 shows a schematic diagram of a structure of a device for acquiring product information according to Embodiment 3 of the disclosure, where to facilitate description, only the part relevant to the embodiment of the disclosure is shown.

The device for acquiring product information may be a software unit, a hardware unit or a unit combining software and hardware running in various application systems.

The device for acquiring product information includes an information collecting module 31, an information filtering module 32, an information analyzing module 33, and a result acquiring module 34, a specific function of each module is as follows.

The information collecting module 31 is configured for collecting, from a public platform, original comment information of a user relevant to a product; the public platform may include a micro-blog and / or a forum.

The information filtering module 32 is configured for filtering the original information collected by the information collecting module.

The information analyzing module 33 is configured for analyzing the information filtered by the information filtering module and acquiring the information on relevance to the product; the information on relevance may include a word of public interest and / or a word of mouth.

The result acquiring module 34 is configured for acquiring information on user feedback on the product by classifying and then counting and analyzing the acquired information on relevance.

The device may further include:
an information storing module 35 configured for: before filtering the collected original information, sorting and then storing the collected original information according to characteristics of content of the collected original information.

The information analyzing module 33 may include:
a word segmenting module 331 configured for: performing, according to a common noun of the product, and / or a like product which is like the product and a similar product which is similar to the product, word segmentation on the filtered information and acquiring a result of the word segmentation.

The information analyzing module 33 may include an acquiring module 332 configured for: acquiring the information on relevance by selecting, from the result of the word segmentation from the word segmenting module, an expression meeting a set frequency of occurrence, and sifting the selected expression through a pre-stored lexicon.

Preferably, in order to monitor the status quo of a competing product of the product, learn a trend of the field in time, and provide a major basis for development of the product and decision-making thereof, the information collecting module 31 may be further configured for collecting, from a public platform, the user's comment information on a like product which is like the product and a similar product which is similar to the product.

In the embodiment, the information filtering module may be further configured for filtering the collected original information, including but not limited to removing repeating content and invalid information in the collected original information.

A device for acquiring product information provided by the embodiment may be used in the method for acquiring product information, referring to description of the method for acquiring product information in Embodiments 1 and 2 for details, which is not repeated.

To sum up, with an embodiment of the disclosure, a user's original comment information relevant to a product is collected from a public platform such as a micro-blog and / or a forum, and is filtered and analyzed to acquire information on relevance to the product, such as a trend of user comments (by word of mouth) on the product and a hotspot of user interest of the product (a word of public interest); acquired words of public interest and / or words of mouth are classified, and statistics and analysis are performed on the classified words of public interest and / or words of mouth to acquire a report on quantitative analysis and / or a report on qualitative analysis regarding the product, such that a product operator may fully learn, according to the report on quantitative analysis and / or the report on qualitative analysis, user feedback on use of the product, so as to improve the product and increase user satisfaction in use. In addition, as the user's original comment information relevant to the product is collected directly from a micro-blog and / or a forum, any of the original information is provided by a user on his/her own initiative (such as by posting a message on a micro-blog, leaving a message on a forum, etc.), without the need to invite any user to take any survey or investigation, thereby effectively reducing cost. Meanwhile, automatic processing after information collection effectively increases efficiency and accuracy. In addition, as multiple information sources (such as Tencent micro-blog, Sina micro-blog, a support platform, etc.) are covered at the same time, a problem of a bias due to a platform difference, reduced degree of accuracy due to lack of quantitative data and high cost in questionnaire distribution may be prevented effectively. In addition, in order to monitor the status quo of a like product which is like the product and a similar product which is similar to the product, learn a trend of the field in time, and provide a major basis for development of the product and decision-making thereof, at the same time the user's original comment information relevant to the network product is collected from a micro-blog and / or a forum, information on a competing product of the product is collected too, thereby increasing practicability.

When implemented in form of a software functional module and sold or used as an independent product, an integrated module of an embodiment of the present disclosure may also be stored in a non-transitory computer-readable storage medium. Based on such an understanding, the essential part or a part contributing to prior art of the technical solution of an embodiment of the present disclosure may appear in form of a software product, which software product is stored in storage media, and includes a number of instructions for allowing a computer equipment (such as a personal computer, a server, a network equipment, or the like) to execute all or part of the methods in various embodiments of the present disclosure. The storage media include various media that can store program codes such as a U disk, a mobile hard disk, a Read-Only Memory (ROM), a Random Access Memory (RAM), a magnetic disk, a CD, and the like. Thus, an embodiment of the present disclosure is not limited to any specific combination of hardware and software.

Accordingly, an embodiment of the present disclosure further provides a non-transitory computer storage medium storing a computer program for executing a method for acquiring product information according to an embodiment of the present disclosure.

What described are merely embodiments of the present disclosure and are not intended to limit the present disclosure. Any modification, equivalent replacement, improvement, and the like made within the disclosure are included in the scope of the disclosure.

## Claims

1. A method for acquiring product information, comprising:
collecting, from a public platform, original comment information of a user relevant to a product;
filtering the collected original information;
analyzing the filtered information and acquiring information on relevance to the product; and
acquiring information on user feedback on the product by classifying and then performing statistics and analysis on the acquired information on relevance.

2. The method according to claim 1, further comprising: before the filtering the collected original information,
sorting and then storing the collected original information according to characteristics of content of the collected original information.

3. The method according to claim 1 or 2, wherein the filtering the collected original information comprises: removing repeating content and invalid information from the collected original information.

4. The method according to claim 1, wherein the analyzing the filtered information and acquiring information on relevance to the product comprises:
performing, according to a common noun of the product, and / or a like product which is like the product and a similar product which is similar to the product, word segmentation on the filtered information and acquiring a result of the word segmentation.

5. The method according to claim 4, wherein the acquiring information on relevance to the product further comprises: after the result of the word segmentation is acquired, acquiring the information on relevance by selecting an expression meeting a set frequency of occurrence in the result of the word segmentation and sifting the selected expression through a pre-stored lexicon.

6. The method according to claim 1, further comprising:
collecting, from the public platform, comment information of the user on a like product which is like the product and a similar product which is similar to the product.

7. A device for acquiring product information, comprising:
an information collecting module configured to collect, from a public platform, original comment information of a user relevant to a product;
an information filtering module configured to filter the original information collected by the information collecting module;
an information analyzing module configured to analyze the information filtered by the information filtering module and acquire information on relevance to the product; and
a result acquiring module configured to acquire information on user feedback on the product by classifying and then performing statistics and analysis on the acquired information on relevance.

8. The device according to claim 7, further comprising:
an information storing module configured to: before filtering the collected original information, sort and then store the collected original information according to characteristics of content of the collected original information.

9. The device according to claim 7 or 8, wherein the information filtering module is further configured to remove repeating content and invalid information from the collected original information.

10. The device according to claim 7, wherein the information analyzing module comprises:
a word segmenting module configured to perform, according to a common noun of the product, and / or a like product which is like the product and a similar product which is similar to the product, word segmentation on the filtered information and acquire a result of the word segmentation.

11. The device according to claim 10, wherein the information analyzing module further comprises:
an acquiring module configured to acquire the information on relevance by selecting, from the result of the word segmentation from the word segmenting module, an expression meeting a set frequency of occurrence, and sift the selected expression through a pre-stored lexicon.

12. The device according to claim 7, wherein the information collecting module is further configured to collect, from the public platform, comment information of the user on a like product which is like the product and a similar product which is similar to the product.

13. A non-transitory computer-readable storage medium, storing computer-executable instructions configured to execute a method for acquiring product information according to any of claims 1-6.
